Europäisches Patentamt

(19) European Patent Office

Office européen des brevets

(11) Numéro de publication: **0 018 878**
**B1**

(12) # FASCICULE DE BREVET EUROPEEN

(45) Date de publication du fascicule du brevet: **22.02.84**

(21) Numéro de dépôt: **80400500.7**

(22) Date de dépôt: **15.04.80**

(51) Int. Cl.³: **H 01 Q 1/28,**
**H 01 Q 21/28, H 01 Q 3/24,**
**G 01 S 13/74**

(54) **Système interrogateur aéroporté comprenant une antenne radar et une antenne d'interrogation.**

(30) Priorité: **26.04.79 FR 7910648**

(43) Date de publication de la demande:
**12.11.80 Bulletin 80/23**

(45) Mention de la délivrance du brevet:
**22.02.84 Bulletin 84/8**

(84) Etats contractants désignés:
**DE GB IT SE**

(56) Documents cités:
**FR - A - 2 249 345**
**US - A - 3 500 412**
**US - A - 3 699 574**
**US - A - 4 108 400**

**M.I. Skolnik, Radar Handbook, McGraw-Hill**
**1970, Pages 11-11, 21-30, 21-31**

(73) Titulaire: **THOMSON-CSF**
**173, Boulevard Haussmann**
**F-75379 Paris Cedex 08 (FR)**

(72) Inventeur: **Pierrot, Robert**
**"THOMSON-CSF" SCPI - 173, bld Haussmann**
**F-75360 Paris Cedex 08 (FR)**
Inventeur: **Gautier, François**
**"THOMSON-CSF" SCPI - 173, bld Haussmann**
**F-75360 Paris Cedex 08 (FR)**
Inventeur: **Crochet, Pierre**
**"THOMSON-CSF" SCPI - 173, bld Haussmann**
**F-75360 Paris Cedex 08 (FR)**

(74) Mandataire: **Benoit, Monique et al,**
**THOMSON-CSF SCPI 173, Bld Haussmann**
**F-75379 Paris Cedex 08 (FR)**

Courier Press, Leamington Spa, England.

Système interrogateur aéroporté comprenant une antenne radar et une antenne d'interrogation

La présente invention concerene les systèmes interrogateurs pour radar aéroporté et les radars comportant un tel système.

Sur les avions de combat modernes il apparaît nécessaire de coupler au radar principal de veille et de poursuite un système interrogateur connu sous le vocable anglo-saxon d'interrogateur "IFF" (Identification Friend or Foe) afin d'intentifier les cibles détectées. Dans ce but il est nécessaire d'implanter deux antennes logées notamment dans la pointe avant de l'avion.

Une solution adoptée couramment consiste à imbriquer l'antenne radar et l'antenne de l'interrogateur de manière que chaque antenne perturbe le moins possible l'antenne adjacente. A titre d'exemple, une solution retenue consiste à disposer des dipôles en polarisation verticale pour l'émission-réception IFF devant une antenne à fentes, une parabole, une antenne Cassegrain non déformable rayonnant en polarisation horizontale. Les deux antennes sont liées mécaniquement donc pointées stabilisées simultanément. Dans ce cas le radôme de protection des antennes est adapté, pour chaque bande de fréquence du signal radar et du signal d'interrogation, par un réseau de fils conducteurs pour la bande IFF.

Cette solution convenable pour le signal d'interrogation se traduit cependant par une perte de performances du radar, perte de gain et remontée des niveaux relatifs des lobes secondaires au radar due à l'interaction avec les dipôles IFF et avec le réseau de fils d'adaptation du radôme.

Dans le cas des antennes à miroir polariseur tournant, une autre solution d'imbrication des antennes est possible mais cette solution n'est pas applicable à tout type d'antenne, la perturbation apportée par les dipôles IFF dans le cas d'une antenne Cassegrain à miroir polariseur tournant étant inacceptable.

La présente invention permet de remédier aux incovénients précités et a pour objet un système interrogateur pour radar dans lequel l'antenne de l'interrogateur est utilisable avec tout type d'antenne radar.

Un autre objet de la présente invention est la mise en oeuvre d'un système interrogateur pour radar pour lequel les fils d'adaptation du radôme sont supprimés.

Un autre objet de la présente invention est la mise en oeuvre d'un système interrogateur pour radar pour lequel les interactions entre antenne radar et antenne interrogateur sont supprimées.

Selon l'invention le système interrogateur aéroporté comprenant une antenne radar d'émission/réception protégée par un radôme, une antenne d'interrogation et des moyens d'alimentation délivrant à ladite antenne d'interrogation un signal d'interrogation hyperfrequence, est caractérisé en ce que:

— l'antenne d'interrogation comprend un premier jeu de deux antennes élémentaires plaquées latéralement sur la paroi externe du radôme et un deuxième jeu de deux antennes élémentaires plaquées latéralement sur la paroi externe du radôme ou de l'avion porteur, les antennes élémentaires de chaque jeu étant disposées symétriquement par rapport à l'axe de révolution du radôme selon une direction parallèle à un plan de référence, et les deux jeux étant séparés l'un de l'autre, selon une direction parallèle à l'axe de révolution du radôme, d'une distance $d$ inférieure ou égal à $\lambda/1+\cos\theta$ où $\lambda$ représente la longueur d'onde moyenne du signal d'interrogation et $\theta$ le secteur d'observation moyen des deux jeux adjacents à partir de l'axe de révolution du radôme, et,

— le système interrogateur comprend des moyens de commutation et de déphasage du signal d'interrogation, les moyens de commutation et de déphasage du signal d'interrogation et les antennes élémentaires constituant une antenne à balayage électronique.

Le système d'interrogation selon l'invention est utilisable notamment par tout radar émetteur-récepteur.

L'invention sera mieux comprise à l'aide de la description et des dessins ci-après dans lesquels:

— la figure 1a représente une vue de l'antenne d'interrogation selon l'invention;
— la figure 1b, représente un diagramme de rayonnement, dans le plan gisement, de l'antenne d'interrogation selon l'invention;
— la figure 2, représente un détail de réalisation de moyens de commutation et de déphasage de l'antenne d'interrogation selon l'invention;
— les figures 3a et 3b, représentent schématiquement respectivement la disposition de l'antenne d'interrogation dans le plan gisement et les faisceaux élémentaires des antennes élémentaires correspondants constituant l'antenne des ce plan;
— la figure 4, représente un diagramme explicatif de combinaison de faisceaux élémentaires en vue de la levée d'ambiguité de l'interrogation;
— la figure 5a, représente un mode de réalisation non limitatif des moyens de commande des moyens de commutation et de déphasage;
— la figure 5b, représente un mode de réalisation non limitatif préférentiel du système d'interrogation selon l'invention permettant notamment une compensation en roulis;

—les figures 6a et 6b, représentent un mode de réalisation préférentiel des antennes élémentaires constituant l'antenne d'interrogation selon l'invention.

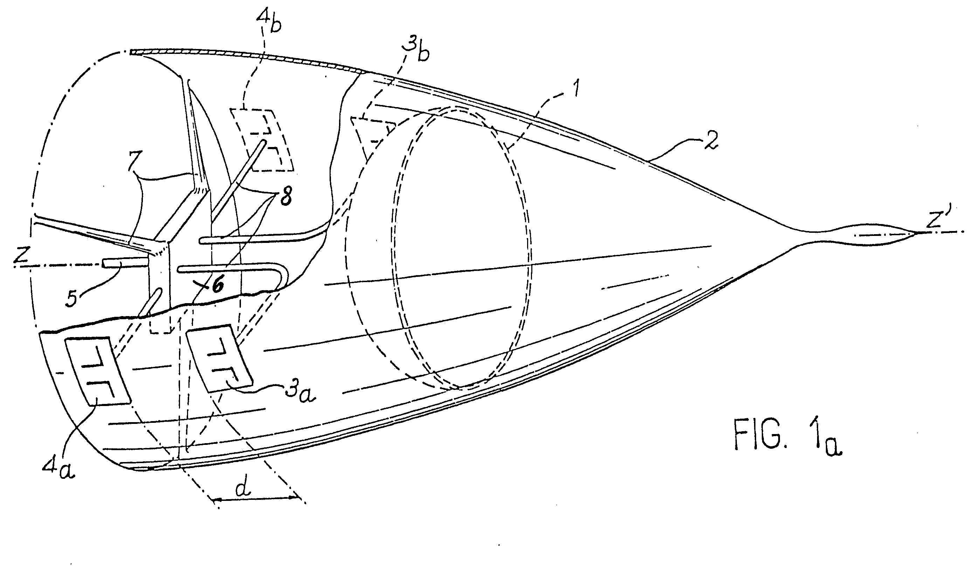

Suivant la figure 1a, le système interrogateur aéroporté selon l'invention comprend une antenne radar 1 d'émission réception protégée par un radôme 2. Le système interrogateur selon l'invention comprend en outre une antenne d'interrogation comprenant un premier jeu de deux antennes élémentaires 3a et 3b disposées symétriquement par rapport à une axe de révolution Z–Z' du radôme. Les antennes élémentaires constituant l'antenne d'interrogation sont disposés à l'arrière de l'antenne radar d'émission réception 1. Des moyens d'alimentation 5 délivrent à l'antenne d'interrogation un signal d'interrogation hyperfréquence par l'intermédiaire de moyens de commutation et de déphasage 6 du signal d'interrogation. Les moyens de commutation et de déphasage 6 du signal interrogation et les antennes élémentaires constituent une antenne à balayage électronique. Selon la figure 1, l'antenne d'interrogation comprend un deuxième jeu de deux antennes élémentaires 4a, 4b plaquées latéralement sur la paroi externe du radôme. Les deux jeux d'antennes élémentaires sont séparés selon une direction parallèle à l'axe de révolution Z–Z' du radôme d'une distance $d$ inférieure ou égale $\lambda/(1+\cos\theta)$ où $\lambda$ représente $d$ représente la longeur d'onde moyenne du signal d'interrogation et $\theta$ le secteur d'observation moyen de deux jeux adjacents, mesuré à partir de l'axe de révolution Z–Z'.

Selon la figure 1a, le premier et deuxième jeux d'antennes élémentaires plaquées sont disposés sur la paroi externe du radôme lui-même. Le mode de réalisation de la figure 1a ne préjuge pas de tout autre mode de réalisation different dans lequel, notamment pour des questions d'encombrement, le deuxième jeu d'antennes élémentaires 4a, 4b est disposé directement sur la paroi de l'avion porteur. Dans un tel cas, et ce sans sortir du cadre de la présente invention, les antennes élémentaires du deuxième jeu sont encastrés dans la paroi métallique de l'avion ou virole support du radôme. Dans tout les cas les deux antennes élémentaires d'un jeu sont disposées symétriquement par rapport à l'axe de révolution Z–Z' du radôme et de préférence orientés selon une direction parallèle à un plan de référence tel que le plan gisement.

Le fonctionnement du dispositif selon l'invention est le suivant, comptetenu de rappel de principe de fonctionnement de l'IFF ci-après: A l'émission à une fréquence de 1030 MHz un train d'impulsions est émis suivant un code connu alternativement sur une voie d'interrogation, voie dont l'orientation du faisceau d'émission est liée à celle de l'antenne radar, et sur une voie contrôle dont le faisceau d'émission large couvre les lobes latéraux de faisceau interrogation. Le fonctionnement du répondeur de l'avion interrogé pèut être résumé en distant que si l'impulsion d'interrogation reçue est supérieure de 9 dB à l'impulsion contrôle il doit y avoir réponse dans 90% des cas. Si l'impulsion d'interrogation est inférieure à l'impulsion contrôle il ne doit pas y avoir de réponse dans plus de 10% des cas. Ces conditions définissent un arc d'interrogation quasi certaine par le regroupement des faisceaux interrogation en contrôle augmenté de 9dB. Ce mode de fonctionnement permet de limiter les réponses provoquées par les différents interrogateurs IFF travaillant dans la même zone. A las réception du signal émis par le répondeur à une fréquence de 1090 MHz, la formation d'une voie de réception normale et facultativement d'une voie de réception auxiliaire simultanée ne permet la prise en compte du signal reçu que si le niveau de réception sur la voie normale dépasse d'une certaine quantité déterminée le niveau sur la voie auxiliaire. Cette condition permet d'éliminer les réponses reçues en provenance de répondeurs interrogés par d'autres systèmes interrogateurs IFF. Le contrôle à l'émission concourt à la discrétion du système IFF et se contente de voies non simultanées, le contrôle à la réception augmente l'efficacité du traitement IFF en limitant les réponses à traiter mais exige deux voies simultanées. Selon l'invention, les antennes élémentaires ont des diagrammes de rayonnement différents se recouvrant deux à deux, chaque antenne élémentaire rayonnant selon un diagramme large et permettant d'observer un secteur d'au moins plus ou moins 60° en gisement et plus ou moins 45° en site. Pour une direction de gisement quelconque, il existe une combinaison portant sur le choix des antennes élémentaires 3a, 3b, 4a, 4b, la phase relative des signaux émis par ces antennes et la répartition d'amplitude telle que la voie interrogation présente un maximum de gain et la voie contrôle un creux autour de cette direction. Normalement la voie contrôle augmentée de 9 dB couvre tous les lobes de la voie d'interrogation et ne laisee subsister dans la direction d'interrogation qu'un arc d'interrogation $\Delta\theta_1$ dans cette direction. Le choix des antennes élémentaires 3a, 3b, 4a, 4b, à l'émission et à la réception, le choix de la phase relative des signaux émis par ces antennes élémentaires et de leur répartition d'amplitude pour l'obtention du diagramme de rayonnement tel que représenté figure 1b est assuré par l'intermédiaire des moyens de commutation et de déphasage 6 du signal d'interrogation, les moyens de commutation et de déphasage 6 de ce signal d'interrogation et les antennes élémentaires constituant une antenne à balayage électronique. Sur la figure 1a, les moyens de commutation et de déphasage 6 ont été représentés par un bloc 6 rendu solidaire du radôme 2 par des pattes de fixation 7. La liaison radio-électrique entre les moyens de commutation et de déphasage 6 et chacun des antennes élémentaires 3a, 3b, et 4a, 4b est assurée par des connecteurs du type câble coaxial 8.

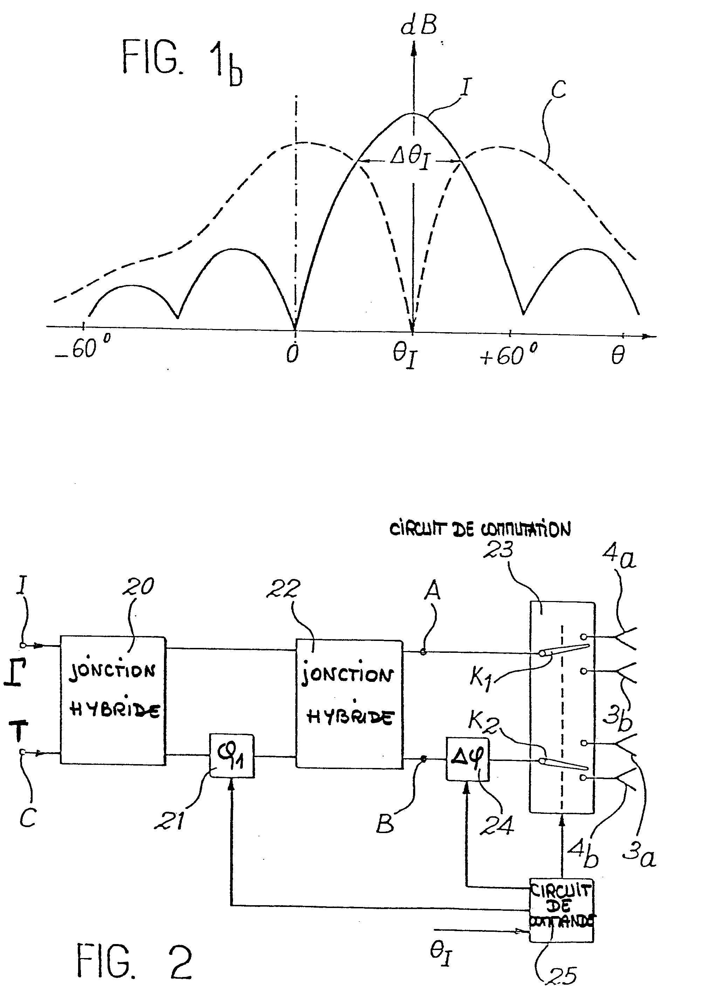

Le schéma de principe des moyens de commutation et de déphasage 6 est donné dans la description ci-après et représenté figure 2. Selon la figure 2, les moyens de commutation et de déphasage 6 du signal d'interrogation comportent deux jonctions hybrides en cascade 20 et 22 séparées par un premier circuit déphaseur 21. Un circuit de commutation 23 relie les sorties de la deuxième jonction hybdride 22 aux antennes élémentaires 3a, 3b, 4a, 4b par l'intermédiaire d'un deuxième circuit déphaseur 24. Un circuit de commande de déphasage et de commutation 25 des premier et deuxième circuits déphaseurs 21, 24 et du circuit de commutation 23 recevant notamment l'information d'orientation de l'antenne radar d'émission réception correspondant à la direction d'interrogation $\theta_1$ permet par le choix des déphasages relatifs apportés par les déphaseurs 21 et 24 et par le choix des antennes élémentaires 3a, 3b ou 4a, 4b effectué par l'intermédiaire du circuit de commutation 23, l'orientation dans la direction d'interrogation $\theta_1$ des diagrammes de rayonnement de la voie interrogation et de la voie contrôle. Les dépointages des faisceaux sont obtenus par action de déphaseur 24. Ce déphaseur peut être quantifié. En effet lorsque deux antennes sont espacées d'une distance $d$, le lobe principal du faisceau a pour largeur

$$\theta_{3dB} = 50\frac{\lambda}{d}$$

où $\lambda$ représente la longueur d'onde d'émission du signal d'interrogation. Pour un déphasage $\Delta\varphi$ le faisceau se déplace de:

$$\Delta\theta = \frac{\lambda}{d}\frac{\Delta\varphi}{\pi}$$

La couverture de la zone précédemment définie sera correctement assurée si:

$$\Delta\theta < \frac{\theta_{3dB}}{4} \text{ soit } \Delta\varphi \leqslant 75°.$$

En pratique le déphasage $\Delta\varphi$ apporté par le déphaseur 24 est choisi nominalement égale à n×45° c'est-à-dire que le déphaseur 24 est quantifié à 3 bits ou 8 états. La répartition d'amplitude est assurée par le déphaseur 21. En effet les diagrammes se recouvrant deux a deux, ces derniers n'ont pas pour autant exactement le même niveau et la formation d'une voie présentant un maximum de gain et d'une autre présentant un minimum de gain dans cette même direction nécessite une répartition d'amplitude inégale entre les deux antennes. Le circuit hyperfréquence représenté figure 2, permet cette répartition à l'aide de simples déphaseurs. Les signaux d'interrogation $\Gamma$ et de contrôle T émis de manière simultanée sont respectivement envoyés à l'entrée du premier circuit hybride 20 par les bornes I, C représentées figure 2.

Les signaux de sortie au point de test A est B du deuxième circuit hybride 22 s'écrivent respectivement pour l'entrée par la voie interrogation:

$$a = \frac{\Gamma}{2} - \frac{\Gamma}{2} \cdot e^{j.\varphi1}$$

$$b = j(\frac{\Gamma}{2} + \frac{\Gamma}{2} \cdot e^{j\varphi1})$$

et pour l'entrée pour la voie contrôle C

$$a = j(\frac{T}{2} + \frac{T}{2}e^{j\varphi1})$$

$$b = \frac{T}{2} e^{j\varphi1} - \frac{T}{2}$$

soit pour l'entrée I

$$a = -j\Gamma \sin\frac{\varphi1}{2} e^{j\ \varphi1/2}$$

$$b = j\Gamma \cos\frac{\varphi1}{2} e$$

et pour l'entrée C

$$a = jT \cos\frac{\varphi1}{2}e^{j\ \varphi1/2}$$

$$b = jT \sin\frac{\varphi1}{2}e^{j\ \varphi1/2}$$

Ainsi la phase relative entre a et b n'est pas affectée par la valeur de $\varphi1$, déphasage apporté par le premier déphaseur 21. L'énergie se répartit comme $\sin^2 \varphi1/2$ et $\cos^2 \varphi1/2$, $\varphi1=\pi/2$ réalisant l'égalité de répartition.

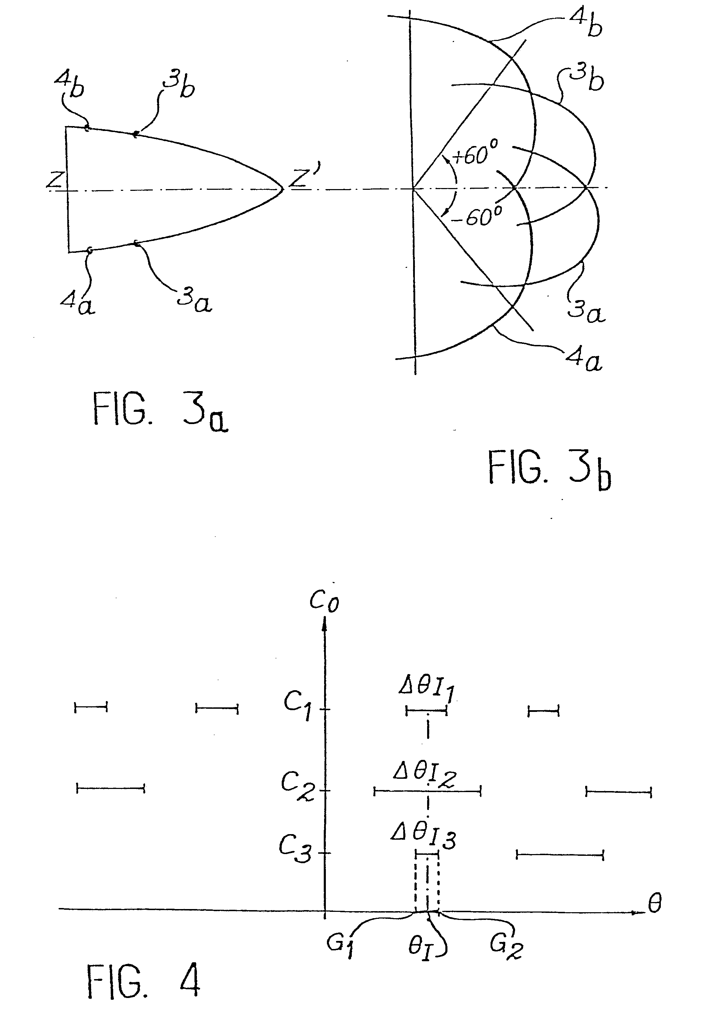

Le circuit déphaseur 24 réalisant pour l'entrée par la voie interrogation I la mise en phase de a et b (signaux relevés aux points test A et B de la figure 2) dans une direction $\theta_1$, donc une voie somme dans cette direction, ce déphaseur réalise en même temps pour l'entrée par la voie contrôle C la mise en opposition de phase de a, b selon cette même direction $\theta_1$ donc une voie différence. Le circuit hyperfréquence représenté figure 2 constitué de deux jonctions hybrides et du déphaseur 21 réalise donc une répartition contrôlée d'énergie entre deux antennes et fournit bien deux voies simultanées l'une d'interrogation, l'autre de contrôle. Le circuit déphaseur 21 peut être quantifié, en effet on peut admettre d'approcher la répartition d'énergie à plus ou moins 1 dB près et la dynamique du système peut être limitée à plus ou moins 7 dB, sept positions de phase suffisant alors. Ainsi un couple d'antennes élémentaires 3b, 3a ou 3b, 4b ou 3a, 4a est sélectionné par l'intermédiaire de commutateurs K1, K2 du circuit de commutation 23. Les diagrammes de rayonnement de ces antennes élémentaires sont ensuites combinés en amplitude et en phase au moyen d'un circuit hyperfréquence constitué par des déphaseurs 21 et 24 de façon à faire varier la position des faisceaux résultants. Ce circuit hyperfréquence permet de faire la somme (voie interrogation) et la-différence (voie contrôle) des diagrammes élémentaires de deux antennes élémentaires en imposant le rapport d'amplitude désiré à partir d'une valeur de phase donnée par le déphaseur 21. Le pointage de la direction d'interrogation IFF, angle $\theta_1$ sur la figure 1b, est asservi sur la direction d'exploration de l'antenne radar 1 par le circuit de commande 25 recevant l'information de pointage $\theta_1$ de l'antenne radar 1. Le circuit de commande impose l'état des déphaseurs 21 et 24 et l'état des commutateurs K1, K2 du circuit de commutation 23. Le circuit hyperfréquence représenté figure 2 permet le pointage d'une voie somme et d'une voie différence simultanée dans une direction quelconque de secteur à couvrir. Le diagramme de rayonnement des antennes élémentaires 3a, 3b, 4a, 4b représentés schématiquement figure 3a est représenté également de manière schématique figure 3b par rapport au secteur à couvrir de plus ou moins 60° en gisement. Or, par suite de la séparation entre les antennes élémentaires 3a et 3b, il apparaît immanquablement des lobes de réseau dans le diagramme de rayonnement du couple 3a, 3b. La séparation entre ces antennes élémentaires et généralement de l'ordre de deux à trois longueurs d'ondes ce qui correspond à une périodicité des lobes de réseau de 30 à 20°. L'existence de ces lobes de réseau a pour conséquence une ambiguïté d'identification, c'est-à-dire, une ambiguïté dans la direction de l'arc d'interrogation qui doit être levée. Les résultats d'une étude approfondie d'un tel système ont montré qu'en général plusieurs combinaisons des valeurs de déphasages introduits par les circuits déphaseurs 21 et 24 et par les positions de commutateurs K1, K2 du circuit de commutation 23 permettent d'obtenir un gain élevé dans une direction donnée et que ces combinaisons ont des arcs d'interrogation disjoints dans d'atures directions. La figure 4 permet l'illustration de ces résultats par la représentation, sur un système d'axe dont l'axe d'ordonné $C_o$ représente les différentes combinaisons, les différentes valeurs de phase des circuit déphaseurs 21 et 24 et les différents états des commutateurs K1, K2 du circuit de commutation 23, les points C1, C2, C3 correspondant chacun à une combinaison déterminée, et dont l'axe des abscisses est gradué en valeur de $\theta$ angle d'une direction donnée dans le plan gisement avec l'axe Z—Z' du radôme.

Sur la figure 4, les différents segments des combinaisons C1, C2, C3 respectivement notés $\Delta\theta_1$, $\Delta\theta_2$, $\Delta\theta_3$ représentent chacun respectivement l'arc d'interrogation pour la combinaison C1, la combinaison C2 et la combinaison C3 dans la direction moyenne d'interrogation $\theta_1$. Ces arcs d'interrogaton $\Delta\theta_1$, $\Delta\theta_2$, $\Delta\theta_3$, définissent les zones d'espace dans lesquelles le niveau du signal d'interrogation est supérieur au niveau du signal de la voie contrôle de 9 dB pour les trois combinaisons différentes des diagrammes de rayonnements C1, C2, C3. Les seules réponses positives à l'ensemble des combinaisons C1, C2, C3 sont contenues dans l'arc G1—G2 représenté sur l'axe des abscisses, arcs correspondant à la coincidence des arcs associés aux séquences C1, C2, C3. Ainsi que l'ensemble des $4 \times n_1 \times n_2$ faisceaux possible à l'aide des quatre positions des commutateurs K1, K2 des $n_1$ positions de curcit déphaseur 21 et $n_2$ positions du circuit déphaseur 24, un nombre important voisin de 50% n'est pas utilisé, un petit nombre sensiblement égal à 10% est utilisé pour l'observation des zones latérales sans ambiguité, et le reste pour l'observation de la zone avant où plusieurs combinaisons sont utilisées pour le même arc d'interrogation afin de lever les ambiguités. Il est ainsi possible par l'utilisation de combinaisons existances d'élaborer pour chaque direction à partir d'un circuit logique de décision un meilleur tri des réponses. Cette solution se traduit cependant par une complexité supérieure du circuit de commande et par la nécessité de mémoriser les informations reçues. Une autre solution particulièrement efficace consiste à associer les réponses trouvées par le système IFF à la cible détectée par le radar par une discrimination en distance.

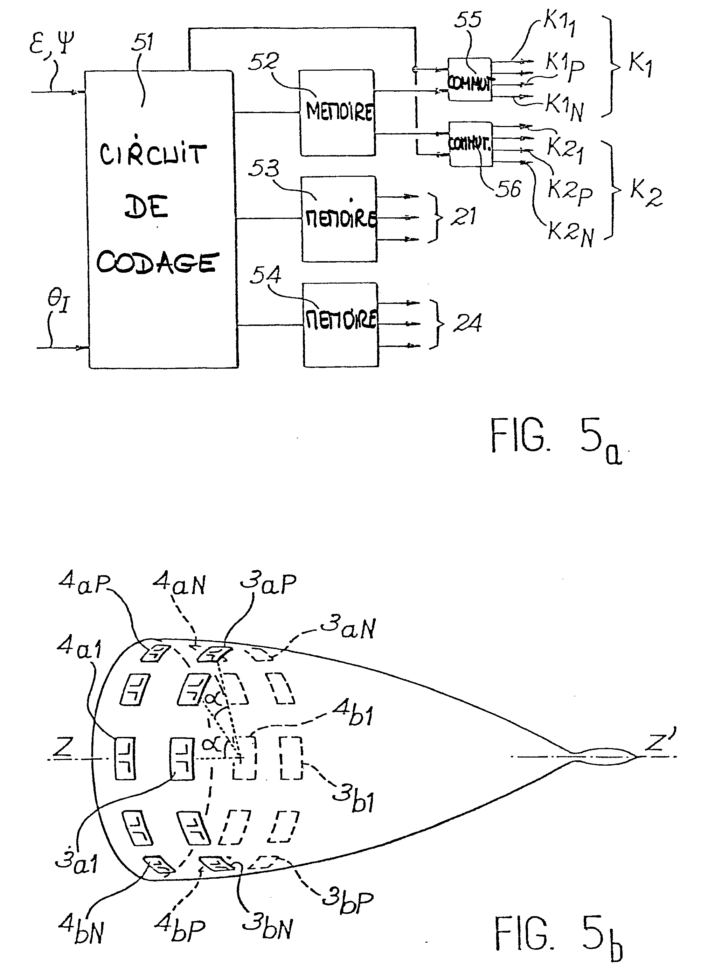

Selon la figure 5a, le circuit de commande de déphasage et de commutation 25 des premier et deuxième circuits déphaseurs 21, 24 et du circuit de commutation 23 comprend un circuit 51 de codage des informations de position de l'antenne radar recevant un signal représentatif du pointage $\theta_1$ de l'antenne radar. Le circuit de commande de déphasage et de commutation 25 comporte également des circuits mémoires mortes programmables 52, 53, 54 contenant les informations de commande des commutateurs K1, K2 des moyens de commutation 23 et des premier et deuxième déphaseurs 21, 24 compte tenu des pointages de l'antenne radar, les circuits mémoires recevant en fonctionnement des signaux délivrés par le circuit de codage et délivrant des signaux de commande des moyens de commutation 23 et des premier et deuxième déphaseurs 21, 24. Selon un mode de réalisation particulier les informations de pointage de l'antenne radar $\theta_I$ sont délivrés au circuit de codage 51 sous forme numérique et ce circuit de codage 51 est réalisé par un microprocesseur du type 6800 par exemple. Toute solution consistant à utiliser pour la commande du dépointage du faisceau d'interrogation IFF le calculateur de bord de l'avion ne sort pas du cadre de la présente invention. Les loyens de commande de commutation et de déphasage 25 comportent en outre des circuits de commutation 55, 56 à positions multiples. Ces circuits de commutation 55 et 56 sont intercalés entre les sorties des circuits mémoires 52 et les différentes antennes élémentaires 3a1, 3a2, ..., 3aP, ..., 3aN; 3b1, 3b2, ..., 3bN et 4a1, 4a2, ..., 4aP, ..., 4aN; 4b1, 4b2, ..., 4bP, ..., 4bN. Les circuits de commutation 55, 56 reçoivent des circuits de coadage 51 un signal de commande de commutation en fonction des paramètres d'attitude de l'avion. Les paramètres d'attitude de l'avion $\varepsilon$, $\Psi$ sont reçus par le circuit de codage 51. Ainsi, pour une variation des paramètres d'attitude $\varepsilon$, $\Psi$ de l'avion, le circuit de codage 51 commande la commutation des circuits de commutation 55, 56 et le rayonnement par les antennes élémentaires voisines déduites du réseau rayonnant avant modification des paramètres d'attitude, d'un nombre déterminé de pas angulaire $\alpha$. Un tel système permet, compte tenu de l'angle de roulis de l'avion de maintenir l'antenne IFF rayanant effectivement dans le plan gisement.

Une telle antenne est représentée figure 5b dans laquelle l'antenne d'interrogation selon l'invention comprend une pluralité de premier et deuxième jeux d'antennes élémantaires plaqués. Chaque couple de jeux d'antennes élémentaires 4aP, 4bP, 3aP, 3bP, est disposé sur une directrice du radôme selon un pas angulaire $\alpha$ déterminé. La commutation du rayonnement sur un couple de jeux de réseaux compte tenu de l'attitude en roulis de l'avion, permet de maintenir le diagramme de rayonnement de l'antenne dans le plan gisement.

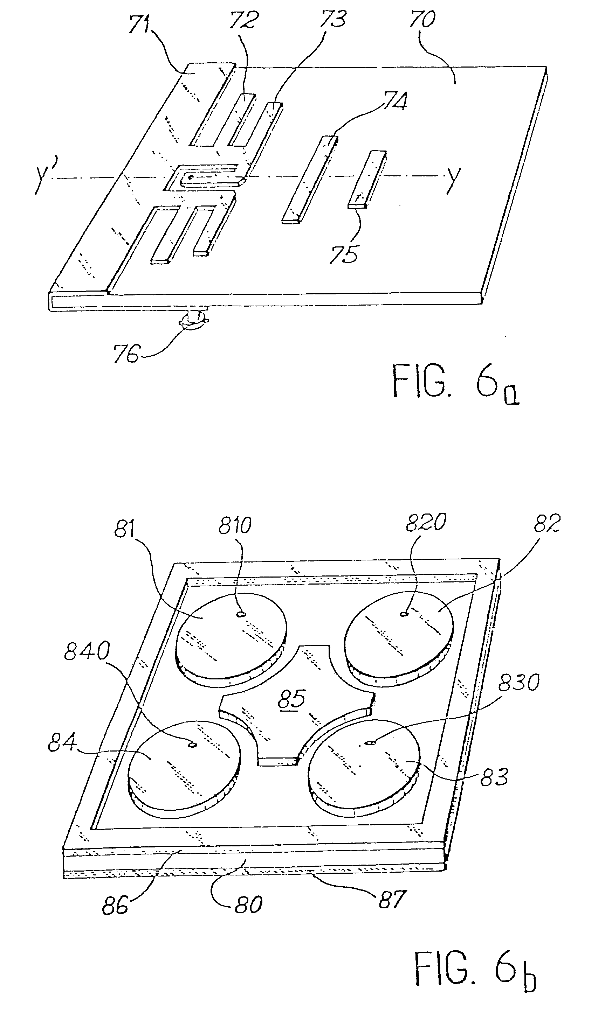

Selon les figures 6a et 6b, les antennes élémentaires constituant les premier et deuxième jeux d'antennes élémentaires sont constitués par des circuits imprimés.

Selon la figure 6a, les antennes élémentaires 3a, 3b sont de préférence de type "Yagi". Les antennes de type "Yagi" sont constituées de préférence sur un substrat de matériau diélectrique 70 par des bandes conductrices parallèles admettant pour axe de symmétrie dans le plan du substrat l'axe Y'Y. Les bandes conductrices 72 et 73 sont directement reliées à un plan de masse de référence 71 et constituent respectivement le réflecteur et le dipôle de l'antenne "Yagi". Deux bandes conductrices 74 et 75 constituent respectivement les éléments directeurs de l'antenne Yagi. L'alimentation du dipôle constitué par les bandes conductrices 73 est assurée par une prise coaxiale 76 dont le conducteur extérieur est relié au plan de masse 71 et l'âme centrale à la conductrice 73 constituant de dipôle. La mise en oeuvre d'une antenne Yagi selon l'invention, pour une bande de fonctionnement de l'antenne IFF comprise entre 1000 et 1100 MHz (bande L) a permis d'obtenir un diagramme de rayonnement dans le plan H possédant une ouverture d'environ 60° à −3 dB et des lobes secondaires situés à un niveau de −20 dB par rapport au maximum de rayonnement. Le gain obtenu par la mise en oeuvre d'une telle antenne est de l'ordre de 8,5 dB.

Selon la figure 6b, les antennes élémentaires 4a, 4b sont constitués par des circuits imprimés comportant sur une première face d'un substrat de matériau diélectrique 80 quatre éléments rayonnant circulaires 81, 82, 83, 84 et d'un élément central 85 constituant un élément passif. Les éléments rayonnants circulaires 81, 82, 83, 84 ont leur centre géométrique disposé de préférence au sommet d'un carré. L'élément central passif 85 est disposé au centre carré et présente de préférence une symmétrie par rapport aux diagonales de ce carré. Les éléments rayonnants circulaires 81, 82, 83, 84 sont alimentés transversalement par des conducteurs non représentés figure 6b, ces conducteurs traversant le substrat de matériau diélectrique 80. Les points de connexion de chaque élément rayonnant circularire et du conducteur d'alimentation sont représentés respectivement pour les éléments 81, 82, 83, 84 par les points 810, 820, 830, 840. La position de ce point de connexion par rapport au centre de chaque élément permet notamment de définir la direction de polarisation du champ électrique rayonné par chaque élément. Une deuxième face de substrat de matériau diélectrique opposée à la première face est revêtue d'une semelle métallique 87 permettant le passage des conducteurs d'alimentation des éléments rayonnants circulaires.

La mise en oeuvre d'une telle antenne imprimée à permis en particulier d'obtenir les résultats suivants: les diagrammes de rayonnements (plan H) présentent une ouverture à mi-puissance de l'ordre de 60° et un dépointage par rapport à l'axe avion de 65°. Le diagramme de rayonnement (Plan E) présente une ouverture à mis-puissance de 70°. Le gain obtenu par la mise en oeuvre d'une telle antenne est de l'ordre de 8,5 dB. La mise en oeuvre d'une telle antenne imprimée permet notamment d'obtenir une antenne élémentaire de dimension réduite par le choix de la distance séparant les éléments rayonnants circulaires en vue de l'obtention du diagramme de rayonnement recherché et par l'adjonction de l'élément central passif. La mise en oeuvre d'une telle antenne imprimée ne préjuge pas de la disposition de cette dernière sur le radôme lui-même ou, ainsi qu'il a été précédemment précisé, sur la virole support du radôme.

On a ainsi décrit un système interrogateur aéroporté permettant notamment l'émission d'un signal d'interrogation et d'un signal contrôle simultanés et la réception des deux voies simultanées. Tout mode de réalisation présentant un nombre particulier d'antennes élémentaires d'émission IFF ne sort pas du cadre de la présente invention. En particulier, tout mode de réalisation permettant en outre, enplus d'un balayage en gisement, un balayage dans un plan perpendiculaire au plan gisement tel que le plan site, ne sort pas du cadre de la présente invention. En effet, le mode de réalisation représenté figure 5b permet notamment par la seule alimentation de deux jeux d'antennes élémentaires tels que 3a1, 3b1, 4a1, 4b1 et 3aP, 3bP, 4aP, 4bP disposées symétriquement par rapport à l'axe Z—Z' et dans un plan perpendiculaire au plan gisement d'obtenir notamment des informations d'interrogation dans ce plan perpendiculaire au plan gisement. La seule modification nécessaire à un tel fonctionnement doit, dans ce cas, être apportée au niveau des commutateurs K1, K2 des moyens de commutation 23, par des interrupteurs permettant l'alimentation en parallèle des antennes élémentaires 4aP, 3bP, 4aP, 4bP. De la même manière une compensation en roulis compte tenu des paramètres $\varepsilon$, $\Psi$ d'attitude de l'avion peut également être effectuée, la modification étant à ce moment là apportée au niveau des commutateurs 55, 56. Dans ce cas, la rotation d'angle $\alpha$ églae au pas de décalage des réseaux sur une directrice du radôme permet la rotation simultanée des jeux d'antennes élémentaires disposés dans le plan site et gisement.

**Revendications**

1. Système interrogateur aéroporté comprenant une antenne radar d'émission/réception (1) protégée par un radôme (2), une antenne d'interrogation et des moyens d'alimentation (5) délivrant à ladite antenne d'interrogation un signal d'interrogation hyperfrequence, caractérisé en ce que:

—l'antenne d'interrogation comprend un premier jeu de deux antennes élémentaires (3a, 3b) plaquées latéralement sur la paroi externe du radôme et un deuxième jeu de deux antennes élémentaires (4a, 4b) plaquées latéralement sur la paroi externe du radôme ou de l'avion porteur, les antennes élémentaires de chaque jeu étant disposées symétriquement par rapport à l'axe (Z—Z') de révolution du radôme selon une direction parallèle à un plan de référence, et les deux jeux étant séparés l'un de l'autre, selon une direction parallèle à l'axe de révolution du radôme, d'une distance $d$ inférieure ou égale à $\lambda/1+\cos\theta$ où $\lambda$ représente la longueur d'onde moyenne du signal d'interrogation et $\theta$ le secteur d'observation moyen des deux jeux adjacents à partir de l'axe de révolution du radôme, et

—le système interrogateur comprend des moyens de commutation et de déphasage (6) du signal d'interrogation, les moyens de commutation et de déphasage du signal d'interrogation et les antennes élémentaires constituant une antenne à balayage électronique.

2. Système interrogateur selon la revendication 1, caractérisé en ce que l'antenne d'interrogation comprend une pluralité de premiers et deuxièmes jeux d'antennes élémentaires (3a1- ... -3ai- ... -3aN, 3b1- ... -3bi- ... -3bN; 4a1- ... -4ai- ... -4aN, 4b1- ... -4bi- ... -4bN) plaquées, chaque couple de jeux d'antennes élémentaires étant disposé sur une directrice du radôme selon un pas angulaire ($\alpha$) déterminé.

3. Système interrogateur selon l'une quelconque des revendications 1 ou 2, caractérisé en ce que les moyens de commutation et déphasage (6) du signal d'interrogation comportent deux jonctions hybrides (20, 22) en cascade séparées par un prelier circuit déphaseur (21), un circuit de commutation (23) reliant les sorties de la deuxième jonction hybride (22) auxdites antennes élémentaires par l'intermédiaire d'un deuxième circuit déphaseur (24) et un circuit de commande de déphasage et de commutation (25) des premier et deuxième circuits déphaseurs (21, 24) et du circuit de commutation (23).

4. Système interrogateur selon la revendication 3, caractérisé en ce que les premier et deuxième circuits déphaseurs (21, 24) sont des déphaseurs quantifiés.

5. Système interrogateur selon la revendication 4, caractérisé en ce que le circuit de commande de déphasage et de commutation (25) du premier et deuxième circuits déphaseurs (21, 24) et du circuit de commutation (23) comprend:

—un circuit de codage (51) des informations de position de l'antenne radar recevant un signal représentatif du pointage de l'antenne radar (1),
—des circuits mémoire morte (52, 53, 54) programmables contenant les informations de commande du premier et deuxième déphaseurs (21, 24) compte tenu des pointages de l'antenne radar, les circuits mémoire recevant en fonctionnement, les signaux délivrés par le circuit de codage et délivrant les signaux de commande des premier et deuxième déphaseurs et du circuit de commutation.

6. Système interrogateur selon la revendication 1, caractérisé en ce que les antennes élémentaires constituant les premier et deuxième jeux (3a, 3b; 4a, 4b) sont constituées par des circuits imprimés.

7. Système interrogateur selon la revendication 6, caractérisé en ce que les antennes élémentaires sont du type "Yagi (71—75).

8. Système interrogateur selon la revendication 2, caractérisé en ce que deux couples de jeux d'antennes élémentaires (3a, 3b; 4a, 4b; et 3aP, 3bP et 4aP, 4bP) disposés dans le plan de référence et dans un plan perpendiculaire au plan de référence sont alimentés, en fonctionnement permettant ainsi un balayage dans les deux plans.

9. Système interrogateur selon les revendications 2, et 5, caractérisé en ce que les moyens de commande de commutation et de déphasage (6) comportent des circuits de commutation à positions multiples (55, 56) recevant des circuits de codage (51, 52) un signal de commande de commutation pour la sélection du couple de jeux d'antennes élémentaires fonction des paramètres d'attitude de l'avion permettant une stabilisation en roulis de l'antenne rayonnant dans le plan de référence.

10. Système interrogateur selon les revendications 8 et 9, caractérisé en ce que les circuits de commutation à positions multiples (55, 56) comportent des interrupteurs pour l'alimentation en parallèle des deux couples de jeux d'antennes élémentaires (3aj, 3bj, 4aj, 4bj et 3aK, 3bK, 4aK 4bK) situés dans les plans perpendiculaires afin de permettre une stabilisation en roulis simultanée de l'antenne rayonnant dans le plan de référence et dans le plan perpendiculaire au plan de référence.

**Patentansprüche**

1. An Bord eines Flugzeugs befindliches IFF-Identifikationssystem (IFF=Freund/Feind-Identifikation) mit einer von einem Radom (2) geschützten Sende- und Empfangs-Radarantenne (1), mit einer IFF-Antenne und mit Speisemitteln (5), die der IFF-Antenne ein IFF-Signal im Hyperfrequenzbereich liefern, dadurch gekennzeichnet, daß

—die IFF-Antenne einen ersten Satz von zwei Elementarantennen (3a, 3b), die seitlich auf die Außenwand des Radoms aufgebracht sind, sowie einen zweiten Satz von Elementarantennen (4a, 4b) aufweist, die seitlich auf die Außenwand des Radoms oder des Flugzeugs aufgebracht sind, wobei die Elemente jedes Satzes symmetrisch zur Mittelachse (Z—Z') des Radoms in einer Richtung angeordnet sind, die parallel zu einer Bezugsebene verläuft, und wobei die beiden Sätze einen gegenseitigen Abstand d in einer zur Mittelachse des Radoms parallelen Richtung aufweisen, der kleiner oder gleich $\lambda/1+\cos\theta$ ist, mit $\lambda$ gleich der mittleren Wellenlänge des IFF-Signals und $\theta$ gleich dem mittleren Beobachtungssektor der beiden nebeneinanderliegenden Antennensätze ausgehend von der Mittelachse des Radoms, und
—das IFF-System Mittel (6) zur Umschaltung und zur Phasenverschiebung des IFF-Signals aufweist und die Elementarantennen eine Antenne mit elektronischer Abtastung bilden.

2. IFF-System nach Anspruch 1, dadurch gekennzeichnet, daß die IFF-Antenne eine Mehrzahl von ersten und zweiten Sätzen von aufgebrachten Elementarantennen (3a1- ... -3ai- ... -3aN, 3b1- ... -3bi- ... -3bN; 4a1- ... -4ai- ... -4aN, 4b1- ... -4bi- ... -4bN) aufweist, wobei jedes Paar von Elementarantennensätzen auf Mantellinien des Radoms gemäß einen bestimmten Winkelabstand $(\alpha)$ zum nächsten Paar angeordnet ist.

3. IFF-System nach einem beliebigen der Ansprüche 1 oder 2, dadurch gekennzeichnet, daß die Mittel (6) zur Umschaltung und Phasenverschiebung des IFF-Signals zwei hybride Junktionen (20, 22) in Kaskade und zwischen sich einen ersten Phasenschieberschaltkreis (21) einschließend aufweisen, daß ein Umschaltkreis (23) die Ausgänge der zweiten hybriden Junktion (22) mit den Elementarantennen über einen zweiten Phasenschieberschaltkreis (24) verbindet und daß ein Steuerschaltkreis (25) für den ersten und den zweiten Phasenschieberschaltkreis (21, 24) und für den Umschaltkreis (23) vorgesehen ist.

4. IFF-System nach Anspruch 3, dadurch gekennzeichnet, daß der erste und der zweite Phasenschieberschaltkreis (21, 24) quantifizierte Phasenschieber sind.

5. IFF-System nach Anspruch 4, dadurch gekennzeichnet, daß der Steuerschaltkreis (25) für den ersten und den zweiten Phasenschieber (21, 24) und den Umschaltkreis (23)

—einen Kodierschaltkreis (51) für die Positionsdaten der Radarantenne, der ein die Richtung der Radarantenne (1) darstellendes Signal zugeführt erhält,
—und programmierbare Festspeicherschaltkreise (52, 53, 54) enthält, die die Steuerinformationen für den ersten und den zweiten Phasenschieber (21, 24) gemäß der Richtung der Radarantenne speichern, wobei die Speicherschaltkreise in Betrieb die vom Kodierschaltkreis stammenden Daten zugeführt erhalten und die Steuersignale für den ersten und den zweiten Phasenschieber und den Umschaltkreis liefern.

6. IFF-System nach Anspruch 1, dadurch gekennzeichnet, daß die den ersten Satz und den zweiten Satz bildenden Elementarantennen 3a, 3b; 4a, 4b) aus gedruckten Leiterbahnen bestehen.

7. IFF-System nach Anspruch 6, dadurch gekennzeichnet, daß die Elementarantennen (71—75) vom Yagityp sind.

8. IFF-System nach Anspruch 2, dadurch gekennzeichnet, daß zwei Paare von Elementarantennensätzen (3a, 3b; 4a, 4b; und 3aP, 4bP und 4aP, 4bP), die sich in der Bezugsebene und in einer dazu senkrechten Ebene befinden, im Betrieb so gespeist sind, daß eine Abtastung in den beiden Ebenen erfolgen kann.

9. IFF-System nach den Ansprüchen 2 und 5, dadurch gekennzeichnet, daß die Steuermittel (6) für die Umschaltung und die Phasenverschiebung Umschaltschaltkreise (55, 56) mit mehreren Stellungen aufweisen, denen von den Kodierschaltkreisen (51, 52) ein Umschalt-Steuersignal für die Auswahl des Paares von Elementarantennensätzen anhängig von der Fluglage des Flugzeugs zugeführt wird, womit die Schräglage der in der Bezugsebene strahlenden Antenne stabilisiert wird.

10. IFF-System nach den Ansprüchen 8 und 9, dadurch gekennzeichnet, daß die Umschalt-Schaltkreise (55, 56) mit mehreren Schaltstellungen Schalter enthalten, über die die beiden in den senkrechten Ebenen liegenden Paare von Elementarantennensätzen (3aj, 3bj; 4aj, 4bj; und 3ak, 3bk; 4ak, 4bk) parallel gespeist werden, so daß die strahlende Antenne zugleich in der Bezugsebene und in der dazu senkrechten Ebene bezüglich der Schräglage stabilisiert werden kann.

**Claims**

1. Airborne IFF (Identification Friend or Foe) system comprising an emission/reception radar antenna (1) which is protected by a radome (2), an IFF antenna and feed means (5) which feed an UHF interrogation signal to the IFF antenna, characterized in that

— the IFF antenna comprises a first set of two elementary antennas (3a, 3b) laid laterally on the outer wall of the radome, and a second set of two elementary antennas (4a, 4b) laid laterally on the outer wall of the radome or of the aircraft, the elementary antennas of each set being disposed symmetrically with respect to the symmetry axis (Z—Z') of the radome along a direction which is parallel to a reference plane, the two sets being separated from one another along a direction which is parallel to the symmetry axis of the radome, by a distance d which is equal or smaller than $\lambda/1+\cos\theta$ in which $\lambda$ represents the mean wave length of the IFF signal and $\theta$ the mean observation angle of two adjacent sets seen from the symmetry axis of the radome, and
— that the system comprises switching and phase shifting means (6) for the interrogation signal and the elementary antennas constitute an electronically scanning antenna.

2. An IFF system according to claim 1, characterized in that the IFF antenna comprises a plurality of first and second sets of elementary antennas (3a1- ... -3ai- ... -3aN, 3b1- ... -3bi- ... -3bN; 4a1- ... -4ai- ... -4aN, 4b1- ... -4bi- ... -4bN), each pair of elementary antenna sets being disposed on a line which is parallel to the radome axis, according to a predetermined angular pitch ($\alpha$).

3. An IFF system according to any one of claims 1 or 2, characterized in that the switching and phase shifting means (6) for the interrogation signal comprise two hybride junctions (20, 22) in a cascade arrangement which are separated by a first phase shifting circuit (21), a switch circuit (23) connecting the outputs of the second hybdride junction (22) to the elementary antennas via a second phase shifting circuit (24), and that a control circuit (25) is provided for the first and second phase shifting circuits (21, 24) and for the switch circuit (23).

4. An IFF system according to claim 3, characterized in that the first and second phase shifting circuits (21, 24) are quantified phase shifters.

5. An IFF system according to claim 4, characterized in that the control circuit (25) for the first and second phase shifting circuits (21, 24) and for the switch circuit (23) comprises

—a circuit (51) for coding the position informations of the radar antenna, this circuit receiving a signal which is an image of the direction of the antenna (1),
—read-only-memory circuits (52, 53, 54) which can be programmed and which contain the control data concerning the first and second phase shifters (21, 24) in dependence of the direction of the radar antenna, the read-only-memory circuits receiving during operation the signals which are delivered by coder circuits and furnishing the control signals to the first and second phase shifters and to the switch circuit.

6. An IFF system according to claim 1, characterized in that the elementary antennas constituting the first and second sets (3a, 3b; 4a, 4b) are made of printed circuits.

7. An IFF system according to claim 6, characterized in that the elementary antennas are Yagi-type antennas (71 to 75).

8. An IFF system according to claim 2, characterized in that two pairs of elementary antenna sets (3a, 3b; 4a, 4b; and 3aP, 3bP and 4aP, 4bP) which are disposed in the reference plane and in a perpendicular plane thereto, are fed during operation in such a way that a scanning is obtained in the two planes.

9. An IFF system according to claim 2 and 5, characterized in that the control means (6) for the switch and phase shifting means comprise multiple position switch circuits (55, 56) which receive from the coder circuits (51, 52) a switch control signal for the selection of the pair of elementary antenna sets in dependence of the attitude parameters of the aircraft, thus permitting a roll stabilisation of the antenna which radiates in the reference plane.

10. An IFF system according to claim 8 and 9, characterized in that the multiple position switch circuits (55, 56) comprise switches for parallelly feeding the two pairs of elementary antenna sets (3aj, 3bj, 4aj, 4bj and 3aK, 3bK, 4aK, 4bK) which are situated in perpendicular planes in such a way, that a simultaneous roll stabilisation of the antenna radiating in the reference plane and in the perpendicular plane thereto is obtained.

FIG. 1a

FIG. 1$_b$

FIG. 2

CIRCUIT DE COMMUTATION

2

FIG. 3a

FIG. 3b

FIG. 4

3

FIG. 5ₐ

FIG. 5ᵦ

4

FIG. 6a

FIG. 6b